# EUROPÄISCHE PATENTANMELDUNG

(11) **EP 0 655 417 A1**
(43) Veröffentlichungstag der Anmeldung: **31.05.1995**
(21) Anmeldenummer: 94118320.4
(22) Anmeldetag: 21.11.1994
(51) Int. Cl.: C02F 1/32, C02F 1/36

(54) **Reaktor zur Entkeimung von Wasser**

(30) Priorität: 26.11.1993 DE 4340406
(71) Anmelder: Grünbeck Wasseraufbereitung GmbH, D-89420 Höchstädt (DE)
(72) Erfinder: Pitter, Irene, Dipl.-Ing.chem., D-89407 Dillingen (DE); Mayr, Wolfgang, D-89344 Aislingen (DE); Hurler, Anton, D-89443 Schwenningen (DE); Büchler, Heinrich, Dr., CH-4106 Therwil (CH)
(74) Vertreter: Prüfer, Lutz H., Dipl.-Phys.

(57) **Zusammenfassung**

Es wird ein Reaktor (1) zur Entkeimung von Wasser mit einem Reaktorgehäuse mit einem Eingang (9) an einem Ende und einem Ausgang (16) an dem anderen Ende geschaffen. Damit ein einerseits ein gutes Aufschließen von Zooplankton und anderen als Wirte für Keime dienenden Lebewesen gewährleistet und andererseits eine gute Entkeimung möglich wird, sind eine UV-Lampe (12) im Inneren des Reaktors (1) und ein Ultraschallschwinger (5) an der Eingangsseite vorgesehen.

## Beschreibung

Die Erfindung betrifft einen Reaktor zur Entkeimung von Wasser nach dem Oberbegriff des Patentanspruches 1.

Ein derartiger Reaktor ist aus der DE-PS 855 521 bekannt. Bei dieser sind mechanische Schwingungserzeuger zum Beispiel in Form von Piezoschwingern in dem eingangsseitigen ersten Abschnitt nahe beim Übergang in den zweiten Abschnitt so angeordnet, daß sie von dem zweiten Abschnitt weg gerichtet in den ersten Abschnitt hinein Energie abstrahlen. Aus der US 4 752 401 A ist ein Reaktor zum Entkeimen von Wasser bekannt, der aus einem Zylinderrohr besteht und bei dem in der Nähe der einen Grundfläche seitlich ein Eingang und in der Nähe der gegenüberliegenden Grundfläche seitlich ein Ausgang vorgesehen sind. In Bohrungen in den beiden gegenüberliegenden Grundflächen sind sich durch den Zylinder erstreckende UV-Rohre gehalten. In der Mitte der Zylinderwandung ist ein Detektor zum Erfassen des Ausmaßes des abgestrahlten UV-Lichtes vorgesehen. Ferner ist eine Ultraschalleinrichtung vorgesehen, die in Abhängigkeit von dem Ausgangssignal des Sensors zur Reinigung der Oberfläche der UV-Röhren vorgesehen ist. Sobald die Röhren wieder in dem vorgegebenen Maße UV-Licht abstrahlen, wird die Ultraschall-Reinigungseinrichtung wieder abgeschaltet.

Aufgabe der Erfindung ist es, einen Reaktor der eingangs beschriebenen Art zu schaffen, mit dem in besonders vorteilhafter Weise sowohl das mechanische Aufschließen von Keimträgern als auch das Abtöten der Keime erfolgt.

Diese Aufgabe wird durch den in Patentanspruch 1 gekennzeichneten Reaktor gelöst. Es wird der Vorteil erreicht, daß unter Verwendung eines einzigen Ultraschallgenerators in dem ersten Abschnitt ein sehr gutes Aufschließen von Keimträgern und gleichzeitig im zweiten Abschnitt ein ständiges Reinigen der UV-Lampen ohne das Erfordernis einer zusätzlichen Ultraschall-Reinigungseinrichtung erzielt wird.

Weiterbildungen der Erfindung sind in den Unteransprüchen gekennzeichnet.

Weitere Merkmale und Zweckmäßigkeiten der Erfindung ergeben sich aus der Beschreibung eines Ausführungsbeispieles anhand der Figuren. Von den Figuren zeigen:

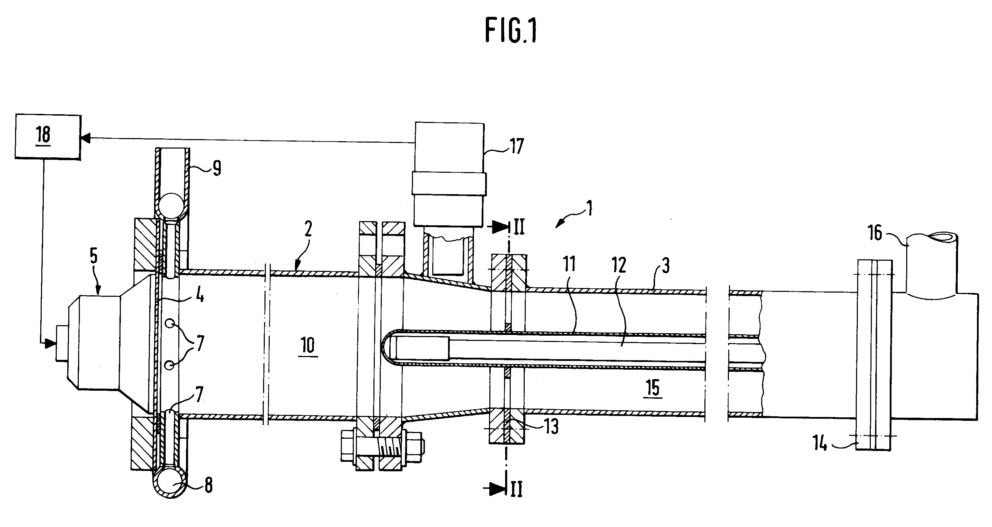

- Fig. 1: eine schematische Darstellung des Reaktors, teilweise im Schnitt;
- Fig. 2: einen Schnitt entlang der Linie II-II in Fig. 1;
- Fig. 3: eine schematische Darstellung einer abgewandelten Ausführungsform des Reaktors (teilweise im Schnitt); und
- Fig. 4: einen Teil des Reaktors einer dritten Ausführungsform.

Für die erste Ausführungsform umfaßt der Reaktor ein rohrförmiges Reaktorgehäuse aus einem ersten Zylinderabschnitt 2 und einem damit verbundenen zweiten Zylinderabschnitt 3. Das dem zweiten Zylinderabschnitt abgewandte freie Ende des ersten Zylinderabschnittes ist durch eine Erregerfläche 4 eines Ultraschallschwingers 5 hermetisch abgedichtet, so daß die Erregerfläche die eingangsseitige Wandung des ersten Zylinderabschnittes bildet.

Unmittelbar angrenzend an die Erregerfläche 4 erstreckt sich in Umfangsrichtung verteilt eine Vielzahl von den Eingang bildenden Eintrittsöffnungen 7, die auf ihrer Rückseite über einen Ringkanal 8 mit einem Eingangsstutzen 9 verbunden sind.

Der an die Erregerfläche angrenzende erste Zylinderabschnitt 2 ist als Ultraschallzone 10 ausgebildet, in der die zu behandelnde Flüssigkeit einer intensiven Ultraschallbeaufschlagung unterzogen wird. Die größenmäßige Bemessung dieses ersten Zylinderabschnittes ist in Abhängigkeit von der Frequenz des Ultraschallschwingers 5 so gewählt, daß ein Ultraschallresonanzverhalten wirksam wird.

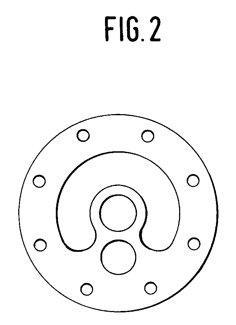

In dem an den ersten Zylinderabschnitt angrenzenden zweiten Zylinderabschnitt ist symmetrisch zur Mittenachse ein Quarzrohr 11 angeordnet, in dessen Innern ein oder mehrere UV-Lampen 12 angeordnet sind. Zur Halterung des Quarzrohres beziehungsweise der UV-Lampen sind in dem zweiten Zylinderabschnitt 3 in einem Abstand zueinander zwei Fassungen 13, 14 vorgesehen, die im Schnitt in Figur 2 darstellt sind. Die Fassungen sind so ausgebildet, daß die Strömung um das Quarzrohr so wenig wie möglich behindert wird, damit das Quarzrohr im wesentlichen in der Mitte der Strömung liegt und die Flüssigkeit gleichmäßig beaufschlagt. Der von dem Quarzrohr 11 durchzogene zweite Zylinderabschnitt 3 bildet die UV-Zone 15. An dem der Ultraschallzone 10 abgewandten Ende der UV-Zone 15 ist ein den Ausgang bildender Ausgangsstutzen 16 angeordnet.

Im Bereich der UV-Lampen, also im Bereich der UV-Zone 15, ist in der Wandung eine Meßeinrichtung 17 zum Erfassen der UV-Strahlungsintensität vorgesehen. Ferner ist eine Regeleinrichtung 18 vorgesehen, die eingangsseitig mit dem Ausgangssignal der Meßeinrichtung 17 beaufschlagt wird. Der Ausgang der Regeleinrichtung ist mit dem Steuereingang des Ultraschallschwingers 5 verbunden. Die Regeleinrichtung 18 ist so ausgebildet, daß sie bei einer vorübergehenden möglichen Absenkung der Intensität der ultravioletten Strahlung infolge möglicher Absetzungen auf dem Quarzrohr 11 die Energie des Ultraschallschwingers 5 so erhöht, daß die Ablagerungen wieder beseitigt werden und somit die volle Ultraviolett-Intensität wieder gemessen wird.

Im Betrieb wird der Reaktor über die Eingangsstutzen 9 mit zu entkeimender Flüssigkeit beaufschlagt. Die Desinfektion erfolgt in dem Reaktor. Durch die gleichmäßige Beaufschlagung der durchströmenden Flüssigkeit wird einerseits ein guter Aufschluß von Zooplankton und anderen als Wirte für Keime dienenden Lebewesen erreicht und gleichzeitig verhindert, daß die Quarzrohre zugesetzt werden, da die Ultraschallwellen auch in die UV-Zone 15 eintreten.

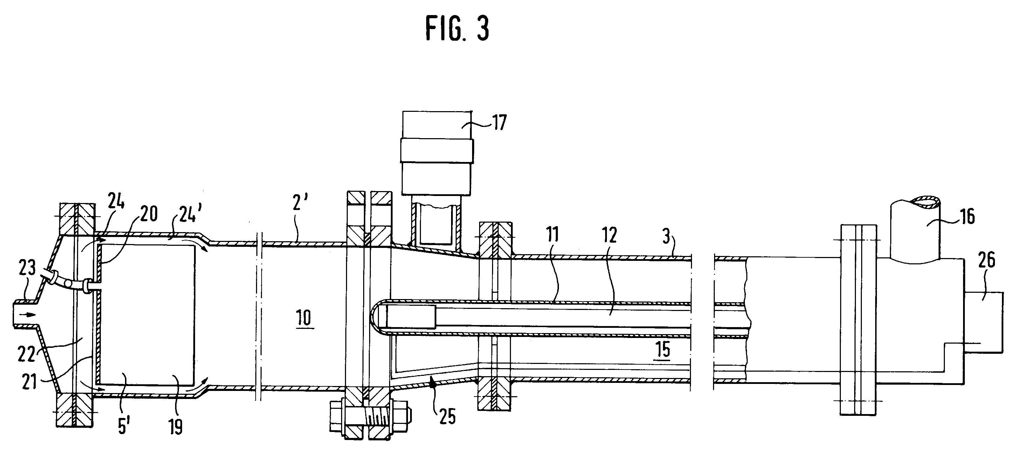

Die in Figur 3 gezeigte Ausführungsform unterscheidet sich von der oben beschriebenen durch die nachfolgend beschriebenen Merkmale, wobei für solche Teile, die mit der zuerst beschriebenen Ausführungsform übereinstimmen, jeweils die gleichen Bezugszeichen verwendet werden.

Damit einerseits möglichst keine Ultraschallenergie auf das Reaktorgehäuse übertragen wird, andererseits aber eine vollständige Beaufschlagung der zu behandelnden Flüssigkeit mit Ultraschallenergie erfolgt, ist der Ultraschallschwinger 5' so ausgebildet, daß der schwingende Teil 19 auf seiner der Ultraschallzone 10 abgewandten Bodenseite über eine schwingungsdämpfende Schicht 20 auf einem Träger 21 montiert ist. Der Träger wiederum ist mit der Gehäusewandung 2' fest verbunden. Zur Wasserzufuhr ist auf der Seite des Trägers 21 eine Kanalzone 22 vorgesehen, die mit einem Zuführstutzen 23 verbunden ist. Die Kanalzone 22 ist über den schwingenden Teil 19 ringförmig durch außen umgebende Öffnungen 24 und eine daran anschließende Kanalzone 24' mit der Ultraschallzone 10 verbunden. Einerseits wird dadurch erreicht, daß der schwingende Körper 19 seine Energie nicht auf das Gehäuse überträgt. Andererseits wird erreicht, daß die gesamte in die Ultraschallzone 10 einfließende Flüssigkeit mit Ultraschallenergie beaufschlagt wird.

Ferner ist eine schematisch angedeutete Belüftungseinrichtung 25 vorgesehen, die ein Röhrchen umfaßt, welches an dem dem Ultraschallschwinger 5 zugewandten freien Ende in das Innere des Quarzrohres 11 mündet und welches aus einem anderen Ende mit einer schematisch angedeuteten Ventilationseinrichtung 26 verbunden ist. Über die Ventilationseinrichtung wird in das Rohrinnere Stickstoff oder ein anderes UV-Strahlung nicht absorbierendes Gas zugeführt, das an dem entgegengesetzten Ende austritt. Dadurch wird erreicht, daß eine ständige Kühlung der Ultraviolett-Lampe auf eine Temperatur, bei der diese ihre optimale Strahlung abgibt, erfolgt. Zu diesem Zweck kann ein die Temperatur im Inneren des Quarzrohres 11 erfassender Temperatursensor vorgesehen sein, der sein Ausgangssignal an eine Regeleinrichtung abgibt, die die Ventilationseinrichtung 26 in Abhängigkeit von der herrschenden Temperatur antreibt.

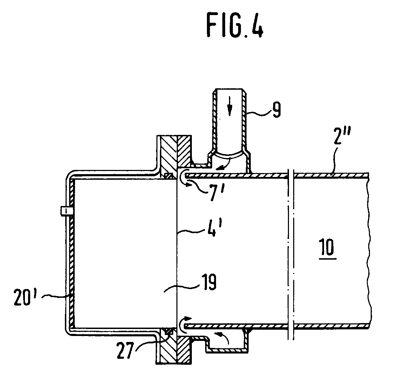

Die in Figur 4 gezeigte Ausführungsform unterscheidet sich von den beiden vorhergehenden dadurch, daß der schwingende Teil 19 über eine schwingungsdämpfende Schicht 20' an dem Zylinderboden des ersten Zylinderabschnittes 2'' befestigt ist. Auf seiner der Ultraschallzone 10 zugewandten Seite ist ein umlaufender Rand 27 aus Dichtungsmaterial vorgesehen. Die Ablenkung der über eine Zuführanordnung ähnlich der ersten Ausführungsform mit Eingangsstutzen 9 und über den umfangverteilten Eintrittsöffnungen 7' unmittelbar am Rand der Erregerfläche 4' erfolgt so, daß die gesamte zugeführte Flüssigkeit von der abzusendenden Ultraschallenergie beaufschlagt wird.

Abweichend zu dem oben beschriebenen Ausführungsbeispiel können alternativ in dem dem ersten Zylinderabschnitt angrenzenden zweiten Zylinderabschnitt symmetrisch zur Mittelachse mehrere Quarzrohre 11 angeordnet werden, in deren Innerem jeweils eine UV-Lampe 12 angeordnet ist.

## Patentansprüche

1. Reaktor zur Entkeimung von Wasser, mit
einem Reaktorgehäuse mit einem eingangsseitigen ersten Abschnitt (2, 2') und einem daran anschließenden und koaxial dazu ausgerichteten zweiten Abschnitt (3), einem Eingang an dem dem zweiten Abschnitt abgewandten Ende des ersten Abschnittes (2, 2') und einem Ausgang (16) an dem dem ersten Abschnitt abgewandten Ende des zweiten Abschnittes,
einem Ultraschallschwinger (5, 5') in dem ersten Abschnitt (2, 2'), der im Betrieb die durchströmende Flüssigkeit zum Aufschließen von Zooplankton und anderen Wirten von Keimen mit Ultraschallenergie beaufschlagt, und wenigstens einer axial angeordneten UV-Lampe (12) in dem zweiten Abschnitt (3),
dadurch gekennzeichnet, daß der Ultraschallschwinger (5, 5') am Eingang so angeordnet ist,
daß sich seine Erregerfläche (4, 4') senkrecht zur Reaktorgehäuseachse und über den gesamten Querschnitt des ersten Abschnittes erstreckt und
die Eingangsöffnung (9, 24) sich um das Rohrende herum erstreckt.

2. Reaktor zur Entkeimung von Wasser nach Anspruch 1,
dadurch gekennzeichnet, daß der Ultraschallschwinger (5') auf seiner dem zweiten Abschnitt abgewandten Grundfläche auf einem mit dem Reaktorgehäuse verbundenen Träger (21) verbunden ist.

3. Reaktor zur Entkeimung von Wasser nach Anspruch 2,
dadurch gekennzeichnet, daß zwischen Ultraschallschwinger (5') und Reaktorgehäuse (2') eine Kanalzone (24') zum Zuführen der zu behandelnden Flüssigkeit vorgesehen ist.

4. Reaktor zur Entkeimung von Wasser nach Anspruch 2 oder 3, dadurch gekennzeichnet, daß zwischen Ultraschallschwinger (5') und dem Träger (21) eine schwingungsdämpfende Schicht (20) vorgesehen ist.

5. Reaktor zur Entkeimung von Wasser nach einem der Ansprüche 1 bis 4,
dadurch gekennzeichnet, daß eine Meßeinrichtung (17) zum Erfassen der Intensität der UV-Abstrahlung vorgesehen ist.

6. Reaktor zur Entkeimung von Wasser nach Anspruch 5,
dadurch gekennzeichnet, daß eine Regeleinrichtung (18) vorgesehen ist, die eingangsseitig mit dem Ausgang der Meßeinrichtung (17) und ausgangsseitig mit dem Ultraschallschwinger (5, 5') verbunden ist.
